(19) Europäisches Patentamt
European Patent Office
Office européen des brevets

(11) **EP 1 835 279 A2**

(12) **EUROPÄISCHE PATENTANMELDUNG**

(43) Veröffentlichungstag:
**19.09.2007 Patentblatt 2007/38**

(51) Int Cl.:
**_G01N 25/18_** _(2006.01)_

(21) Anmeldenummer: **07005147.9**

(22) Anmeldetag: **13.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **13.03.2006 DE 10611816**

(71) Anmelder: **Betriebsforschungsinstitut VDEh Institut für angewandte Forschung GmbH 40042 Düsseldorf (DE)**

(72) Erfinder:
• **Oliver Hofer
53545 Linz (DE)**

• **Rolf Klima
42799 Leichlingen (DE)**
• **Rongshan Lin
66763 Dillingen (DE)**
• **Harald Rausch
44424 Homburg (DE)**

(74) Vertreter: **Tilmann, Max Wilhelm et al König Szynka Tilmann von Renesse Patentanwälte Partnerschaft Lohengrinstrasse 11 40549 Düsseldorf (DE)**

(54) **Verfahren und Messvorrichtung zur Ermittlung der Wärmeleitfähigkeit des Feuerfestmaterials einer Ofenauskleidung**

(57) Die Erfindung betrifft ein Verfahren zur Ermittlung der Wärmeleitfähigkeit des Feuerfestmaterials einer Ofenauskleidung, bei dem der Wärmestrom durch die Ofenauskleidung mit einer in der Ofenauskleidung angeordneten Wärmestromsonde oder aus der Temperaturdifferenz über einen in der Ofenauskleidung angeordneten Referenzkörper aus einem Referenzmaterial mit im wesentlichen bekannter Wärmeleitfähigkeit ermittelt wird, mit mindestens einem Temperaturmeßelement die Temperatur des Feuerfestmaterials im Bereich des Temperaturmeßelements ermittelt wird und die Wärmeleitfähigkeit des Feuerfestmaterials im Bereich des Temperaturmeßelements aus dem Wärmestrom durch die Ofenauskleidung und dem Meßwert des Temperaturmeßelements ermittelt wird.

Fig.1

**Beschreibung**

Die Erfindung betrifft ein Verfahren und eine Meßvorrichtung zur Ermittlung der Wärmeleitfähigkeit des Feuerfestmaterials einer Ofenauskleidung und nimmt die Priorität der deutschen Patentanmeldung 10 2006 011 816.2 in Anspruch.

Insbesondere auf einem der möglichen Einsatzgebiet der Erfindung, nämlich dem der schmelzmetallurgischen Gefäße, wie Hochöfen oder im Bereich der Hochöfen eingesetzter Pfannen, aber auch in den Anwendungsbereichen anderer Öfen werden die Begrenzungswände dieser Öfen regelmäßig mit sogenanntem Feuerfestmaterial ausgekleidet. Dieses soll zum einen den Wärmeverlust durch die Ofenwände reduzieren und damit die Energieeffizienz des Ofens steigern. Zum anderen soll das Feuerfestmaterial die weiteren Bestandteile der Ofenwand, wie beispielsweise eine metallene Außenwand, vor den im Ofeninneren herrschenden Temperaturen schützen und eine Schädigung dieser Teilelemente verhindern.

Häufig weisen Ofenwände in Hochöfen einen mehrteiligen Aufbau auf. So werden beispielsweise zwei in Wärmestromrichtung aneinandergrenzende Zonen aus unterschiedlichem Feuerfestmaterial innen, ein Bereich, in den auch nachträglich noch feuerfeste Massen verfüllt werden können (sogenanntes "muxen"), und schließlich außen eine Außenwand (häufig: "Panzerung") vorgesehen.

Aufgrund der Temperaturbelastung, aber auch anderer, beispielsweise abrasiver Belastungen durch die im Ofeninneren befindlichen Materialien, wie beispielsweise einer Metallschmelze, kommt es zum Verschleiß des Feuerfestmaterials. Die primären Verschleißphänomene sind dabei die Erosion, ein chemischer Angriff oder thermomechanische Spannungen. Diese führen zu einer Reduktion der Wandstärke (Restwandstärke) der Auskleidung mit Feuerfestmaterial. Mit zunehmender Reduktion der Wandstärke dieser sogenannten Feuerfestauskleidung besteht die Gefahr, daß die Ofenwand beschädigt wird und im schlimmsten Fall das im Ofeninnere befindliche heiße Material, beispielsweise eine Stahlschmelze, nach außen austritt.

In der Praxis ist man deshalb dazu übergegangen, die Restwandstärke zu überwachen. Hierfür werden einzelne Thermoelemente in die Ofenwand eingebracht und der zeitliche Temperaturverlauf gemessen. Aufgrund experimenteller und theoretischer Überlegungen existieren mittlerweile zweidimensionale oder dreidimensionale Wärmeleitungsmodelle, die einen numerischen Lösungsansatz verwenden und auf FEM- oder FVM-Berechnungen beruhen. Mittels dieser Wärmeleitungsmodelle lassen sich Rückschlüsse auf die verbleibende Wandstärke der Feuerfestauskleidung auf Grundlage der ermittelten Temperaturverläufe ziehen.

Die vorbeschriebenen Wärmeleitungsmodelle basieren u.a. auf Stoffdaten der verwendeten Feuerfestmaterialien sowie dem genauen Aufbau des Feuerfestmauerwerks. Eine wichtige Stoffgröße ist dabei die Wärmeleitfähigkeit der verwendeten Feuerfestmaterialien.

Vor diesem Hintergrund liegt der vorliegenden Erfindung die Aufgabe zugrunde, ein Verfahren und eine Meßvorrichtung zu Ermittlung der Wärmeleitfähigkeit des Feuerfestmaterials einer Ofenauskleidung vorzuschlagen.

Diese Aufgabe wird durch die Gegenstände der nebengeordneten Ansprüche gelöst. Vorteilhafte Ausführungsformen sind in den Unteransprüchen angegeben.

Die Erfindung geht von dem Grundgedanken aus, die Wärmeleitfähigkeit der verwendeten Feuerfestmaterialien nicht als einen, beispielsweise aus einem Tabellenwerk oder aus Herstellerangaben festgelegten konstanten Wert zu ermitteln, sondern die Wärmeleitfähigkeit des Feuerfestmaterials der Ofenauskleidung unmittelbar vor Ort aufgrund von Meßwerten zu ermitteln. Dadurch vermeidet die Erfindung, daß falsche Werte für die Wärmeleitfähigkeit in die Wärmeleitungsmodelle eingegeben werden und verhindert damit die möglicherweise fatale Konsequenz, daß aufgrund eines falschen Wärmeleitfähigkeitswert eine größere Restwandstärke ermittelt wird, als sie tatsächlich vorhanden ist. Ferner wurde erkannt, daß sich die Wärmeleitfähigkeit aufgrund von Alterungsprozessen im Feuerfestmaterial mit der Zeit ändern kann. So können sich beispielsweise Risse, sogenannte "morsche Zonen" oder infiltrierte Bereiche bilden. Auch können aufgrund unterschiedlicher Wärmeausdehnungskoeffizienten der Gefäßwand (beispielsweise der metallenen Außenwand) und dem an die Gefäßwand angrenzenden Feuerfestmaterialen Fugen aufgehen. Selbstverständlich führt die fehlende Berücksichtigung einer derart veränderten Wärmeleitfähigkeit zu fehlerhaften Ergebnissen bei der Restwandbestimmung mit der Gefahr der vorgenannten fatalen Folgen.

Durch die durch das erfindungsgemäße Verfahren möglich gewordene Erhöhung der Genauigkeit der Verschleißberechnung ergibt sich eine bessere Planbarkeit von Reparaturen und Neuzustellungen, eine höhere Sicherheit und die Möglichkeit Lebensdauer verlängernde Maßnahmen gezielter einzuleiten.

Da Schädigungen im Mauerwerkt, wie Risse oder sog. "morsche Zonen" die Wärmeleitfähigkeit oder einen separate (gesondert) ermittelten Parameter, insbesondere den Widerstandsbeiwert, erheblich verändern, werden auch sie erkannt. Aufgehende Fugen zwischen Feuerfestmaterial und Außenwand haben ebenfalls Einfluß auf die erfindungsgemäß ermittelte Wärmeleitfähigkeit oder einen zusätzlich ermittelten Parameter, insbesondere den Widerstandsbeiwert. Das erfindungsgemäße Verfahren ermöglicht daher auch die Identifikation dieser Verschleißphänomene.

Anlagenbetreiber können so die erforderlichen Gegenmaßnahmen, so beispielsweise das sog. "Muxen" früher als bislang einleiten. Mit dem erfindungsgemäßen Verfahren läßt sich also eine erhebliche Verlängerung der Haltbarkeit der Öfen erreichen.

Im nachstehenden wird unter einem gesondert oder separat ermittelten Parameter ein Wert verstanden, der aufgrund anderer Meß- und ggf. konstanter oder konstant angenommener Werte ermittelt wird.

Die erfindungsgemäß vorgeschlagenen Beziehung sind häufig abhängig von Werkstoffwerten weiterer Schichten (Mauerwerks- oder Mantelschichten, wie beispielsweise deren Wärmeleitfähigkeit. Dies hängt mit dem voranstehend beschriebenen Aufbau zusammen. Unter der sogenannten "i-ten weiter äußeren Mauerwerkts- oder Mantelschicht anderer Wärmeleitfähigkeit" wird deshalb insbesondere die 1ste, 2te, 3te, ... n-te Schicht verstanden, die aus einem anderen Feuerfestmaterial oder einem gänzlich andere Material (wie beispielsweise die Panzerung), bzw. die gemuxte Schicht verstanden. Der Zähler "i" bezeichnet die jeweilige Position der damit gekennzeichneten Schicht im Bezug auf die beobachtete Schicht. So ist die in Wärmestromrichtung unmittelbar an die beobachtete Schicht angrenzende Schicht anderer Wärmeleitung beispielsweise die i=1-te, also erste Schicht.

In die erfindungsgemäß vorgeschlagenen Beziehungen können entweder Werkstoffwerte für die Schichten anderer Wärmeleitfähigkeit eingesetzt werden, die aufgrund von Herstellerangaben, Nachschlagewerken oder dergleichen ermittelt wurden. Insbesondere bevorzugt werden aber auch diese Werte nach den erfindungsgemäßen Verfahren ermittelt.

Unter einer "bekannten" Wärmeleitfähigkeit versteht die Erfindung eine Wärmeleitfähigkeit, die im wesentlichen, also insbesondere im Vergleich zur Wärmeleitfähigkeit des Feuerfestmaterials, zumindest nahezu konstant bleibt, oder deren Änderung im Verhältnis zu Parametern, wie beispielsweise der Temperatur oder der Einbauzeit gut bekannt ist.

Die Erfindung ist - wie nachstehend näher ausgeführt - auf eine Mehrzahl von Ofentypen und -bauformen anwendbar. Insbesondere ist sie auf solche Öfen anwendbar, die

- eine ebene Wand, vorzugsweise eine aus mathematischer Sicht nahezu unendliche Ausdehnung, also eine Wand, bei der die Länge und Höhe der Wand sehr groß im Verhältnis zur Dicke der Wand ist, aufweisen oder/und
- eine zylindrische oder kegelförmige, bzw. kegelstumpfförmige Wand oder eine solche, die zumindest die Form von Abschnitten eines Zylinders oder eines Kegels oder eines Kegelstumpfs aufweist, aufweisen, oder/und
- eine kugelförmige Wand oder eine solche, die zumindest die Form von Abschnitten einer Kugel aufweist, aufweisen.

Im Nachfolgenden wird der Begriff "Wärmestrom" auch als "Wärmestromdichte" verstanden, wie dies auch in der Branche üblich ist.

Das erfindungsgemäße Verfahren zur Ermittlung der Wärmeleitfähigkeit des Feuerfestmaterials einer Ofenauskleidung sieht vor, die Wärmestromdichte durch die Ofenauskleidung mit einer in oder an der Ofenauskleidung angeordneten Wärmestromsonde oder aus der Temperaturdifferenz über einen in oder an der Ofenauskleidung angeordneten Referenzkörper aus einem Referenzmaterial mit im wesentlichen bekannter Wärmeleitfähigkeit zu ermitteln. Ferner ist vorgesehen, mit mindestens einem Temperaturmeßelement die Temperatur des Feuerfestmaterials im Bereich des Temperaturmeßelements zu ermitteln. Es hat sich gezeigt, daß auf Grundlage dieser Informationen die Wärmeleitfähigkeit des Feuerfestmaterials im Bereich des Temperaturmeßelements hinreichend präzise bestimmt werden kann.

Um beispielsweise für die zweidimensionalen oder dreidimensionalen Wärmeleitungsmodelle ein möglichst präzises Abbild der Wärmeleitfähigkeitsverteilung in dem Feuerfestmaterial der Ofenauskleidung bereitzustellen, wird vorzugsweise eine Mehrzahl von Temperaturmeßelementen über die Ofenauskleidung verteilt und mit dem erfindungsgemäßen Verfahren die Wärmeleitfähigkeit des Feuerfestmaterials im Bereich des jeweiligen Temperaturmeßelements ermittelt.

Das erfindungsgemäße Verfahren setzt zur Bestimmung der Wärmestromdichte eine in oder an der Ofenauskleidung angeordnete Wärmestromsonde oder die Temperaturdifferenz und die bekannte Wärmeleitfähigkeit eines in oder an der Ofenauskleidung angeordneten Referenzkörpers aus einem Referenzmaterial mit im wesentlichen bekannter Wärmeleitfähigkeit ein. Damit wird die Wärmestromdichte unabhängig von der Wärmeleitfähigkeit des Feuerfestmaterials selbst bestimmt.

Da erkannt wurde, daß die Wärmeleitfähigkeit des Feuerfestmaterials über die Zeit veränderlich ist, würde eine auf der Wärmeleitfähigkeit des Feuerfestmaterials basierende Berechnung des Wärmestroms, beispielsweise eine auf der Temperaturdifferenz zwischen zwei in der Ofenauskleidung vorgesehenen Temperaturmeßelemente und einer als zeitlich konstant angenommenen Wärmeleitfähigkeit des Feuerfestmaterials basierende Berechnung des Wärmestroms genau den Fehler beinhalten, den die Erfindung u.a. vermeiden möchte. Indem erfindungsgemäß auf eine Wärmestromsonde oder einen Referenzkörper zurückgegriffen wird, kann sichergestellt werden, daß die ermittelte Wärmestromdichte der tatsächlich fließenden im wesentlichen entspricht.

Als Referenzkörper wird insbesondere ein Körper aus einem Referenzmaterial mit im wesentlichen bekannter, insbesondere bevorzugt zeitlich konstanter Wärmeleitfähigkeit verwendet, wobei als eine im wesentlichen konstante Wärmeleitfähigkeit eine solche angesehen wird, die sich im Verhältnis zur Wärmeleitfähigkeit des Feuerfestmaterials über die Zeit und bei den gegebenen Bedingungen gar nicht oder nur sehr gering ändert. Insbesondere werden bevorzugt als Referenzmaterial verwertet: Feuerfestmaterialien auf Kohlenstoff-, Graphit-, Kermaik- und Betonbasis, Metalle und Metallverbindungen wie Kupfer, Bronze, Messing, oder die unter den Handelsnamen/Marken bekannten Stähle Inconel oder Nicrobel, hochtemperaturfeste Stähle und Standardstähle wie die unter den Bezeichnungen St 35 oder St 37-2 bekannten sowie Spezialstähle und Spezialmetallverbindungen und eine Kombination aus diesen. Der Referenzkörper kann beispielsweise eine quader- oder zylindrische Form aufweisen. Insbesondere sind zumindest in Wärmeflußrichtung beabstandet zwei Temperaturmeßelemente in dem Referenzkörper angeordnet, so daß die Temperaturdifferenz über den in der Ofenauskleidung angeordneten Referenzkörper ermittelt werden kann und auf Grundlage der so ermittelten Temperaturdifferenz und der bekannten Wärmeleitfähigkeit des Referenzmaterials die Wärmestromdichte durch die Ofenauskleidung berechnet werden kann.

In einer bevorzugten Ausführungsform des Verfahrens wird mit einem zweiten Temperaturmeßelement die Temperatur des Feuerfestmaterials an einem zweiten, zumindest in Wärmeflußrichtung zum ersten beabstandeten Meßpunkt ermittelt. Das zweite Temperaturmeßelement wird dabei insbesondere bevorzugt in Bezug auf die senkrecht zur Wärmeflußrichtung weisenden Raumrichtungen im wesentlichen an der gleichen Stelle wie das erste Temperaturmeßelement plaziert und lediglich in Bezug auf die Wärmeflußrichtung beabstandet zu dem ersten Temperaturmeßelement angeordnet. Da die Temperaturmeßelemente jedoch häufig in von außen in die Ofenwand eingebrachte Bohrungen eingesetzt werden, die nach dem Einsetzen der Temperaturmeßelemente mit Material hinterfüllt werden, das nicht zwingend dem Feuerfestmaterial im Bereich des Meßpunkts des Temperaturmeßelements entsprechen muß, ist es besonders bevorzugt, daß das zweite Temperaturmeßelement in einer zur Wärmeflußrichtung senkrechten Raumrichtung zumindest leicht versetzt angeordnet wird, so daß zwischen den beiden Temperaturmeßelementen in Wärmeflußrichtung tatsächlich durch die Bohrungen unbeschädigte Bereiche der Ofenauskleidung verbleiben, deren Wärmeleitfähigkeit dann durch das erfindungsgemäße Verfahren gut bestimmt werden kann. Alternativ können die Temperaturmeßstellen aber auch in die gleiche Bohrung eingesetzt werden. Typischerweise beträgt der Abstand der Temperaturmeßstelle in einer anderen als der senkrecht zum Wärmestrom stehenden Richtung 50-1600 mm. Als eine solche Richtung wird auch eine schräg, aber nicht senkrecht zum Wärmestrom weisende Richtung verstanden.

Die bevorzugte Ausführungsform der Erfindung sieht vor, daß aus dem Meßsignal des ersten Temperaturmeßelements und dem Meßsignal des zweiten Temperaturmeßelements eine Temperaturdifferenz ermittelt wird und die Wärmeleitfähigkeit des Feuerfestmaterials im Bereich zwischen den beiden Temperaturmeßelementen aus dem Wärmestrom durch die Ofenauskleidung (ermittelt durch die Wärmestromsonde), dem Abstand der Temperaturmeßelemente, insbesondere in nicht senkrechter Richtung zur Wärmeflußrichtung, und der Temperaturdifferenz ermittelt wird. In einer bevorzugten Ausführungsform ist die Wärmestromsonde dabei in der Nähe der Temperaturmeßelemente angeordnet.

In einer bevorzugten Ausführungsform wird die Wärmeleitfähigkeit (lambda) für eine im wesentlichen zylinderförmige oder kegelförmige Wand mit der Beziehung:

$$\text{lambda} = \dot{q}_s \times r_s \frac{\ln\dfrac{r + \Delta s}{r}}{T_1 - T_2}$$

ermittelt, wobei

$\dot{q}_s$   = die ermittelte Wärmestromdichte in (W/m$^2$),

$r_s$   = der Abstand der Wärmestromsonde, bzw. des Referenzkörpers zur Zylinder- oder Kegelachse in (m),

r   = der Abstand des ersten Temperaturmeßelements zur Zylinder- oder Kegelachse in (m),

DELTA s   = der Abstand des ersten Temperaturmeßelements zum zweiten Temperaturmeßelement in (m),

$T_1$   = die von dem ersten Temperaturmeßelement gemessene Temperatur in (K),

$T_2$   = die von dem zweiten Temperaturmeßelement gemessene Temperatur in (K).

Für eine ebene Wand kann die Wärmeleitfähigkeit (lambda) mit der Beziehung:

$$\text{lambda} = \dot{q}_s \times \frac{\Delta s}{T_1 - T_2}$$

ermittelt werden, wobei

$\dot{q}_s$ = die ermittelte Wärmestromdichte in (W/m$^2$),

DELTA s = der Abstand des ersten Temperturmeßelements zum zweiten Temperaturmeßelement in (m),

$T_1$ = die von dem ersten Temperaturmeßelement gemessene Temperatur in (K),

$T_2$ = die von dem zweitenTemperaturmeßelement gemessene Temperatur in (K).

In einem alternativen Verfahren wird neben der durch das in der Ofenwand vorgesehene Temperaturmeßelement ermittelten Temperatur im Bereich dieses Temperaturmeßelements die Außentemperatur der dem Ofen umgebenden Atmosphäre ermittelt. Die Wärmeleitfähigkeit im Bereich des Temperaturmeßelements wird dann aus dem durch die Wärmestromsonde ermittelten Wärmestrom, der durch das Temperaturmeßelement ermittelten Temperatur und der Außentemperatur ermittelt.

Für eine im wesentlichen ebene Wand kann die Wärmeleitfähigkeit (lambda) beispielsweise mit der Beziehung:

$$\text{lambda} = \frac{\Delta s_T}{\dfrac{T - T_a}{\dot{q}_s} - \left[\sum_{i=1}^{n} \dfrac{\Delta s_i}{\lambda_i}\right] - \dfrac{1}{\alpha_a}}$$

ermittelt werden, wobei

$\dot{q}_s$ = die ermittelte Wärmestromdichte in (W/m$^2$),

DELTA $s_T$ = der Abstand des Temperaturmeßelements zur nächst äußeren Mauerwerks- oder Mantelschicht mit anderer Wärmeleitfähigkeit oder zur Außenseite des Ofens in (m),

DELTA $s_i$ = die Dicke der i-ten weiter äußeren Mauerwerks- oder Mantelschicht mit anderer Wärmeleitfähigkeit in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

$T_a$ = die Außentemperatur der den Ofen umgebenden Atmosphäre in (K),

T = die von dem Temperaturmeßelement gemessene Temperatur in (K),

n = die Anzahl der weiter äußeren Mauerwerks- oder Mantelschichten mit anderer Wärmeleitfähigkeit.

Für eine im wesentlichen zylinderförmige oder kegelförmige Wand kann die Wärmeleitfähigkeit (lambda) beispielsweise mit der Beziehung:

$$\text{lambda} = \frac{r_a \times \ln\!\left(\dfrac{r_1}{r_T}\right)}{\dfrac{T - T_a}{\dot{q}_s \times r_s} - \left[\sum_{i=1}^{n} \dfrac{r_a \times \ln\!\left(\dfrac{r_{i+1}}{r_i}\right)}{\lambda_i}\right] - \dfrac{1}{\alpha_a}}$$

ermittelt werden, wobei

$\dot{q}_s$ = die ermittelte Wärmestromdichte in (W/m$^2$),

$r_a$, $r_{n+1}$ = der Abstand der Außenwand des Ofens zur Achse des Zylinders oder des Kegels in (m)

$r_S$ = der Abstand der Position der Wärmestromsonde zur Achse des Zylinders oder des Kegels in (m)

$r_T$ = der Abstand des Temperaturmeßelements zur Achse des Zylinders oder des Kegels in (m),

$r_i$ = der Abstand der inneren Wand der i-ten weiter äußeren Mauerwerks- oder Mantelschicht mit anderer Wärmeleitfähigkeit zur Achse des Zylinders oder des Kegels in (m),

$r_1$ = der Abstand des äußeren Endes des aus gleichem Feuerfestmaterial bestehenden Abschnitts, in dem das Temperaturmeßelement angeordnet ist, zur Achse des Zylinders oder Kegels in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

T$_a$ = die Außentemperatur der den Ofen umgebenden Atmosphäre in (K),

T = die von dem Temperaturmeßelement gemessene Temperatur in (K),

n = die Anzahl der weiter äußeren Mauerwerks- oder Mantelschichten mit anderer Wärmeleitfähigkeit.

Die Erfindung sieht ferner ein Verfahren zur Ermittlung der Wärmeleitfähigkeit des Feuerfestmaterials einer Ofenauskleidung vor, bei dem mit einem ersten Temperaturmeßelement die Temperatur des Feuerfestmaterials an einem ersten Meßpunkt und mit einem zweiten Temperaturmeßelement die Temperatur des Feuerfestmaterials an einem zweiten, zumindest in Wärmeflußrichtung zum ersten beabstandeten Meßpunkt ermittelt wird und mit einem dritten Temperaturmeßelement die Temperatur der den Ofen umgebenden Atmosphäre gemessen wird. Erfindungsgemäß wird die Wärmeleitfähigkeit des Feuerfestmaterials im Bereich zwischen den beiden Temperaturmeßelementen aus den Meßwerten der Temperaturmeßelemente und von der räumlichen Position der Temperaturmeßelemente abhängigen Lagenangaben ermittelt.

Insbesondere bevorzugt wird die Wärmeleitfähigkeit lambda für eine im wesentlichen ebene Wand mit der Beziehung:

$$\text{lambda} = \frac{(\Delta s_{TE} + \Delta s_T) \times (T_K - T_a) - \Delta s_T \times (T_H - T_K)}{(T_H - T_K) \times \left[ \left( \sum_{i=1}^{n} \frac{\Delta s_i}{\lambda_i} \right) + \frac{1}{\alpha_a} \right]}$$

ermittelt, wobei

DELTA s$_T$ = der Abstand des im kälteren Bereich angeordneten Temperaturmeßelements zur nächst äußeren Mauerwerks- oder Mantelschicht anderer Wärmeleitfähigkeit oder zur Außenseite in (m),

DELTA s$_{TE}$ = der Abstand des ersten Temperaturmeßelements zum zweiten Temperturmeßelement in (m)

DELTA s$_i$ = die Dicke der i-ten weiter äußeren Mauerwerks- oder Mantelschicht mit anderer Wärmeleitfähigkeit in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

T$_a$ = die Außentemperatur der den Ofen umgebenden Atmosphäre in (K),

n = die Anzahl der weiter äußeren Mauerwerks- oder Mantelschichten mit anderer Wärmeleitfähigkeit,

T$_K$ = die von dem im kälteren Bereich angeordneten Temperaturmeßelement gemessene Temperatur in (K),

T$_H$ = die von dem im wärmeren Bereich angeordneten Temperaturmeßelement gemessene Temperatur in (K) und

Für eine im wesentlichen zylinder- oder kegelförmige Wand kann die Wärmeleitfähigkeit (lambda) mit der Beziehung:

$$\text{lambda} = \frac{(T_H - T_a) \times \ln\left(\frac{r_1}{r_K}\right) - (T_K - T_a) \times \ln\left(\frac{r_1}{r_H}\right)}{(T_K - T_H) \times \left[ \left( \sum_{i=1}^{n} \left( \frac{\ln\left(\frac{r_{i+1}}{r_i}\right)}{\lambda_i} \right) \right) + \frac{1}{\alpha_a \times r_a} \right]}$$

ermittelt werden, wobei

| | | |
|---|---|---|
| $r_K$ | = der Abstand des im kälteren Bereich angeordneten Temperaturmeßelement zur Achse des Zylinders oder Kegels in (m), | |
| $r_H$ | = der Abstand des im heißeren Bereich angeordneten Temperaturmeßelement zur Achse des Zylinders oder Kegels in (m), | |
| $r_1$ | = der Abstand des äußeren Endes des aus gleichem Feuerfestmaterial bestehenden Abschnitts, in dem das erste und das zweite Temperaturmeßelement angeordnet sind, zur Achse des Zylinders oder Kegels in (m), | |
| $r_a$, $r_{n+1}$ | = der Abstand der Außenwand des Ofens zur Achse des Zylinders oder des Kegels in (m) | |
| $r_i$ | = der Abstand der inneren Wand der i-ten weiter äußeren Mauerwerks- oder Mantelschicht zur Achse des Zylinders oder des Kegels in (m), | |
| $lambda_i$ | = die Wärmeleitfähigkeit der i-ten weiter äußeren Mauerwerks- oder Mantelschicht mit anderer Wärmeleitfähigkeit in (W/(m K)), | |
| $n$ | = die Anzahl der weiter äußeren Mauerwerks- oder Mantelschichten mit anderer Wärmeleitfähigkeit, | |
| $alpha_a$ | = der Wärmeübergangskoeffizient an der Außenseite der Außenwand zur umgebenden Atmosphäre hin in (W(m2 K), | |
| $T_K$ | = die von dem im kälteren Bereich angeordneten Temperaturmeßelement gemessene Temperatur in (˚C oder K), | |
| $T_H$ | = die von dem im wärmeren Bereich angeordneten Temperaturmeßelement gemessene Temperatur in (˚C oder K) und | |
| $T_a$ | = die Außentemperatur der den Ofen umgebenden Atmosphäre in (˚C oder K). | |

In einer bevorzugten Ausführungsform der vorstehend beschriebenen Verfahren wird die zeitliche Veränderung der Wärmeleitfähigkeit ermittelt, indem die Wärmeleitfähigkeit zu verschiedenen Zeitpunkten ermittelt und die zu den verschiedenen Zeitpunkten ermittelten Wärmeleitfähigkeitswerte miteinander verglichen werden.

Bei einer bevorzugten Ausführungsform der erfindungsgemäßen Verfahren, bei denen ein erstes Temperaturmeßelement zur Ermittlung der Temperatur des Feuerfestmaterials an einem ersten Meßpunkt und ein zweites Temperaturmeßelement zur Ermittlung der Temperatur des Feuerfestmaterials an einem zweiten, in Wärmeflußrichtung zum ersten beabstandeten Meßpunkt vorgesehen ist, wird die ermittelte Wärmeleitfähigkeit mit einem Vergleichswert verglichen und bei einem Unterschied der ermittelten Wärmeleitfähigkeit der Abstand beiden Temperaturmeßelemente zueinander solange angepaßt, bis die ermittelte Wärmeleitfähigkeit dem Vergleichswert entspricht.

Es hat sich gezeigt, daß die Ermittlung der Restwandstärke gravierende Fehler aufweisen kann, die durch Fehler des Einbaus der Temperaturmeßelemente bedingt werden. Die zur Bestimmung der Restwandstärke eingesetzten zweidimensionalen oder dreidimensionalen Wärmeleitungsmodelle gehen davon aus, daß die ihnen zugeführten Temperaturmeßwerte an bestimmten Meßpunkten ermittelt werden. Wird das für die Ermittlung der Temperatur an diesem Meßpunkt eingesetzte Temperaturmeßelement jedoch beim Einbau nicht genau an diesem Meßpunkt installiert, sondern beabstandet dazu, so daß die tatsächlich bestimmte Temperatur nicht die Temperatur an dem vorgesehenen Meßpunkt, sondern an einem danebenliegenden Meßpunkt ist, wird dem Wärmeleitungsmodell ein Temperaturwert zugeführt, der nicht der Temperatur an dem angenommenen Meßpunkt entspricht. In dem beispielsweise bei der Installation der Meßelemente die erfindungsgemäß ermittelte Wärmeleitfähigkeit mit einem separat ermittelten Vergleichswert verglichen wird, kann festgestellt werden, ob die Temperaturmeßelemente tatsächlich den angenommenen Abstand zueinander aufweisen und der Abstand der Temperaturmeßelemente entweder entsprechend angepaßt oder aber die jeweiligen Temperaturwerte rechnerisch auf den gewünschten Meßpunkt umgerechnet werden muß. Als erfindungsgemäß einzusetzende Vergleichswerte könnten neben den Herstellerangaben, die bevorzugt nur nach einer Neuinstallation verwendet werden sollten, auch Vergleichswerte eingesetzt werden, die beispielsweise experimentell bestimmt werden. So kann beispielsweise der bei der Erzeugung der das Temperaturmeßelement aufnehmenden Bohrung entstehende Bohrkern zur Ermittlung des Vergleichswerts eingesetzt werden, indem experimentell die Wärmeleitfähigkeit dieses Bohrkerns bzw. von Abschnitten des Bohrkerns ermittelt wird. Ebenso kann ein Mittelwert aus den Wärmeleitfähigkeiten als Vergleichswert verwendet werden, die aus den Messungen von mehreren gleichartig angeordneten Temperaturmeßelement-Paarungen ermittelt werden. Zusätzlich kann ein gesondert ermittelter Parameter, insbesondere der Widerstandsbeiwert als Vergleichswert verwendet werden.

Ferner sieht das erfindungsgemäße Verfahren ein Vorgehen vor, das auf einem gesondert ermittelten Parameter, insbesondere dem Widerstandsbeiwert, beruht, wie es in den Ansprüchen 14 bis 21 offenbart ist.

Die erfindungsgemäße Meßvorrichtung zur Ermittlung der Wärmeleitfähigkeit des Feuerfestmaterials einer Ofenauskleidung weist insbesondere ein erstes Temperaturmeßelement und ein zweites Temperaturmeßelement oder eine Wärmestromsonde auf. Ferner kann die Meßvorrichtung eine Auswerteeinheit aufweisen, der das Meßsignal des ersten Temperaturmeßelements (erste Meßsignal) und das Meßsignal des zweiten Temperaturmeßelements (zweites Meßsignal) oder das Meßsignal der Wärmestromsonde (drittes Meßsignal) zugeführt wird. Die erfindungsgemäße Meßvorrichtung sieht vor, daß das zweite Temperaturmeßelement beabstandet zum ersten Temperaturmeßelement angeordnet ist. Die Auswerteeinheit ist so eingerichtet oder programmiert, daß sie die Wärmeleitfähigkeit des Feuerfestmaterials in Abhängigkeit des ersten Meßsignals und des zweiten Meßsignals bzw. in Abhängigkeit des ersten und des dritten Meßsignals bestimmen kann.

Als Temperaturmeßelemente werden insbesondere bevorzugt Thermoelemente verwendet. Alternativ können jedoch auch PE-100 Meßfühler, Pyrometer oder Flüssigkeitsthermometer als Temperaturmeßelemente verwendet werden. Thermoelemente eignen sich für den Einsatz als Temperaturmeßelemente besonders gut, weil sie bei den gegebenen Umgebungsbedingungen präzise und im wesentlichen störungsfrei messen können und zudem bei den gegebenen Meßbedingungen eine gute Ausfallbeständigkeit aufweisen.

Eine erfindungsgemäße Meßvorrichtung zur Ermittlung der Wärmeleitfähigkeit kann auch nur eine Temperaturmeßstelle und eine Wärmestromsonde aufweisen. Wie das vorstehend erläuterte Verfahren zeigt, können auch mit einer solchen Meßvorrichtung bereits gute Meßergebnisse erreicht werden.

Eine erfindungsgemäße Meßvorrichtung zur Ermittlung der Wärmeleitfähigkeit des Feuerfestmaterials einer Ofenauskleidung weist ein erstes Temperaturmeßelement, ein zweites Temperaturmeßelement und eine Wärmestromsonde auf. Bevorzugt kann eine Auswerteeinheit vorgesehen sein, der das Meßsignal des ersten Temperaturmeßelements (erste Meßsignal) und das Meßsignal des zweiten Temperaturmeßelements (zweites Meßsignal) und das Meßsignal der Wärmestromsonde (drittes Meßsignal) zugeführt werden. Eine derartige Meßvorrichtung erlaubt die Durchführung der voranstehend beschriebenen bevorzugten Ausführungsform des erfindungsgemäßen Meßverfahrens.

Eine erfindungsgemäße Meßvorrichtung zur Ermittlung der Wärmeleitfähigkeit des Feuerfestmaterials einer Ofenauskleidung kann anstelle der vorgenannten Bauformen mit Wärmestromsonden auch die gleichen Bauformen, allerdings mit einem Referenzmeßkörper aufweisen, der aus einem Referenzmaterial besteht und der ein vorderes Temperaturmeßelement und ein hinteres Temperaturmeßelement aufweist, die beabstandet zueinander in dem Referenzmaterial angeordnet sind. Bevorzugt kann eine Auswerteeinheit vorgesehen sein, der das Meßsignal des ersten Temperaturmeßelements (erste Meßsignal) und das Meßsignal des zweiten Temperaturmeßelements (zweites Meßsignal) und die Meßsignale des vorderen und des hinteren Temperaturmeßelements zugeführt werden. Eine derartige Meßvorrichtung erlaubt die Durchführung der voranstehend beschriebenen bevorzugten Ausführungsform des erfindungsgemäßen Meßverfahrens.

Insbesondere finden das erfindungsgemäße Verfahren und die erfindungsgemäßen Meßvorrichtungen Einsatz bei der Ermittlung der Wärmeleitfähigkeit des Feuerfestmaterials im Gestellbereich eines Hochofens. Die Erfindung ist auf diese Einsatzgebiet jedoch nicht beschränkt. Unter dem hier verwendeten Begriff Ofen und mit ihm zusammenhängende Begriffe, wie beispielsweise Ofenwand oder Ofenauskleidung, werden deshalb auch andere schmelzmetallurgische Gefäße, wie beispielsweise Pfannen, und damit zusammenhängende Begriffe verstanden. Unter Ofen werden auch solche Ofen verstanden, in denen andere als metallurgische Güter, wie beispielsweise Keramiken oder dergleichen, erwärmt werden.

Nachfolgend wird die Erfindung anhand einer lediglich Ausführungsbeispiele darstellenden Zeichnung näher erläutert. Darin zeigt:

Fig. 1    einen Ausschnitt einer Ofenwand mit einer Ofenauskleidung und Teilen der erfindungsgemäßen Meßvorrichtung in einer schematischen, geschnittenen Seitenansicht eine näherungsweise zylinderförmige oder kegelförmige Wand;

Fig. 2    einen Ausschnitt einer Ofenwand mit einer Ofenauskleidung und Teilen einer alternativen Ausführung der erfindungsgemäßen Meßvorrichtung für eine näherungsweise "unendlich ausgedehnte ebene Wand";

Fig. 3    ein Ausschnitt einer Ofenwand mit einer Ofenauskleidung und Teilen einer alternativen Ausführung der erfindungsgemäßen Meßvorrichtung für eine näherungsweise zylinderförmge oder kegelförmige Wand

Fig. 4    ein Ausschnitt einer Ofenwand mit einer Ofenauskleidung und Teilen einer zweiten Ausführung der erfindungsgemäßen Meßvorrichtung für eine näherungsweise "unendlich ausgedehnte ebene Wand" und

Fig. 5    ein Ausschnitt einer Ofenwand mit einer Ofenauskleidung und Teilen einer zweiten Ausführung der erfindungsgemäßen Meßvorrichtung für eine näherungsweise zylinderförmge oder kegelförmige Wand.

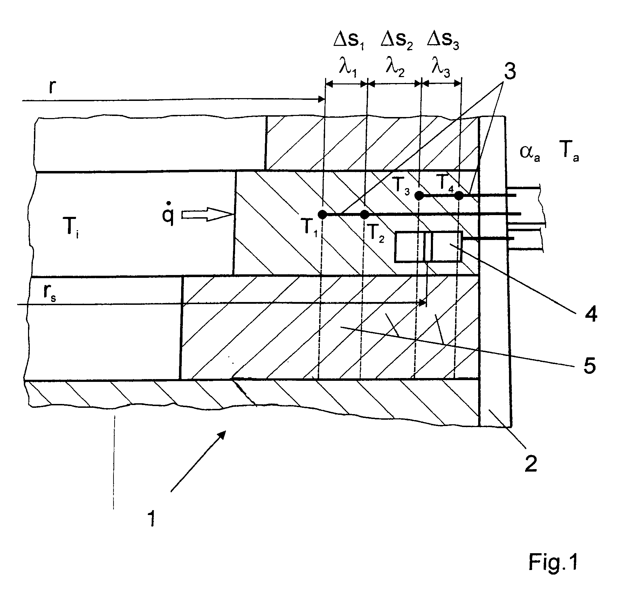

In Fig. 1 ist ein Ausschnitt einer Ofenwand mit einer aus mehreren Steinen aus einem Feuerfestmaterial zusammengesetzten Ofenauskleidung 1 und einer den Ofen nach außen hin abschließenden Außenwand 2 dargestellt. In einem der Feuerfestmaterialsteine der Ofenauskleidung sind Temperaturmeßelemente $T_1$, $T_2$, $T_3$ und $T_4$ dargestellt. Diese sind über einzelne, schematisch dargestellte Leitungen 3 mit einer außerhalb des Ofens angeordneten, nicht näher dargestellten Auswerteeinheit verbunden. Ferner ist in dem Stein der Ofenauskleidung eine Wärmestromsonde 4 angeordnet.

Fig. 1 zeigt ferner, daß die Wärmestromsonde in einem Abstand $r_s$ von einem Referenzpunkt, beispielsweise dem Mittelpunkt eines im Querschnitt kreisförmigen Ofens angeordnet ist. Ferner ist zu erkennen, daß das erste Temperaturmeßelement $T_1$ in einem Abstand r von diesem Referenzpunkt angeordnet ist.

Fig. 1 zeigt ferner die durch die Ofenwand strömende Wärmestromdichte $q$. Diese ergibt sich aufgrund der in dem Ofen deutlich höheren Temperatur $T_i$ im Verhältnis zur Temperatur der den Ofen umgebenden Atmosphäre $T_a$.

In Fig. 1 ist ferner zu erkennen, daß in Wärmestromrichtung das zweite Temperaturmeßelemente $T_2$ um den Abstand Delta $s_1$ von dem ersten Temperaturmeßelement entfernt angeordnet ist. Zwischen dem ersten Temperaturmeßelement $T_1$ und dem zweiten Temperaturmeßelement $T_2$ ist eine erste der insgesamt drei Wärmeleitfähigkeitszonen 5 eingezeichnet, der die Wärmeleitfähigkeit $lambda_1$ zugeordnet ist. In gleicher Weise sind das zweite Temperaturmeßelement $T_2$ und das dritte Temperaturmeßelement $T_3$ um den Abstand Delta $s_2$ beabstandet angeordnet, sowie das dritte Temperaturmeßelement $T_3$ und das vierte Temperaturmeßelement $T_4$ um den Abstand Delta $s_3$ voneinander beabstandet angeordnet sind. Den zwischen den jeweiligen Temperaturmeßelementen angeordneten Wärmeleitfähigkeitszonen sind die Wärmeleitfähigkeiten $lambda_2$ bzw. $lambda_3$ zugeordnet, wie in Fig. 1 dargestellt.

Nach einer bevorzugten Ausführungsform des erfindungsgemäßen Verfahrens ergeben sich die jeweiligen Wärmeleitfähigkeiten für die einzelnen Wärmeleitfähigkeitszonen für eine näherungsweise zylinderförmige oder kegelförmige Wandaus den folgenden Beziehungen:

$$\lambda_1 = \dot{q}_s \times r_s \times \frac{\ln\dfrac{r + \Delta s_1}{r}}{T_1 - T_2}$$

$$\lambda_2 = \dot{q}_s \times r_s \times \frac{\ln\dfrac{r + \Delta s_1 + \Delta s_2}{r + \Delta s_1}}{T_2 - T_3}$$

$$\lambda_3 = \dot{q}_s \times r_s \times \frac{\ln\dfrac{r + \Delta s_1 + \Delta s_2 + \Delta s_3}{r + \Delta s_1 + \Delta s_2}}{T_3 - T_4}$$

wobei

$\dot{q}_s$      = die ermittelte Wärmestromdichte in $(W/m^2)$

$r_s$      = der Abstand der Wärmestromsonde, bzw. des Referenzkörpers zur Zylinder- oder Kegelachse

r      = der Abstand des ersten Temperaturmeßelements von der Zylinder- oder Kegelachse in (m)

Delta $s_i$      = der Abstand des i-ten zum (i+1)-ten Temperaturmeßelementes in Wärmflußrichtung in (m) und

$T_i$      = die von dem i-ten Temperaturmeßelement ermittelte Temperatur ist.

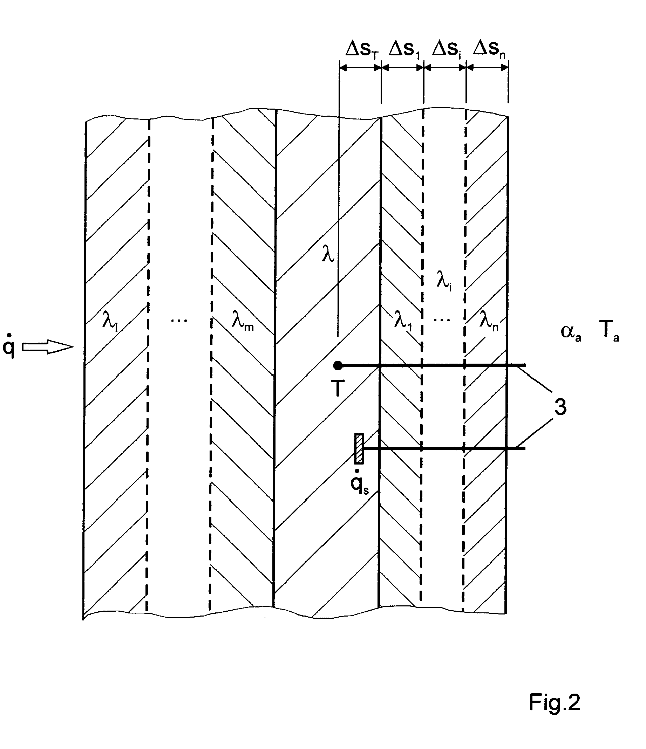

Die in Fig. 2 abschnittweise in einer Schnittdarstellung dargestellte näherungsweise "unendlich ausgedehnte ebene Ofenwand" ist aus mehreren Abschnitten zusammengesetzt. Die Ofenwand wird nach außen durch eine Außenwand, häufig auch "Panzer" genannt, abgeschlossen. Diese Außenwand weist die Wärmeleitfähigkeit $lambda_n$ auf. Angrenzend an die Außenwand ist eine Ofenauskleidung vorgesehen, die aus mehreren mit Feuerfestmaterialsteinen gemauerten oder mit Stampfmassen bzw. Feuerfestbetonen ausgefüllten Bereichen mit den jeweiligen Wärmeleitfähigkeiten $\lambda_i$ besteht Die aus mehreren Feuerfestmaterialsteinen gemauerte oder mit Stampfmassen bzw. Feuerfestbetonen ausgefüllten Bereiche haben die Wandstärke DELTA $s_i$.

In einem der Feuerfestmaterialsteine der Ofenauskleidung ist das Temperaturmeßelement T und die Wärmestromsonde $\dot{q}_s$ dargestellt. Diese sind über einzelne, schematisch dargestellte Leitungen 3 mit einer außerhalb des Ofens angeordneten, nicht näher dargestellten Auswerteeinheit verbunden.

Fig. 2 zeigt ferner, daß weitere Wandabschnitte bekannter oder unbekannter Wärmeleitfähigkeit in Richtung auf das Ofeninnere vorgesehen sein können. Das erste Temperaturmeßelement T ist in einem Abstand DELTA $s_T$ zur nächst äußeren Mauerwerks- oder Mantelsicht mit anderer Wärmeleitfähigkeit angeordnet.

Fig. 2 zeigt ferner die durch die Ofenwand strömende Wärmestromdichte $\dot{q}$. Diese ergibt sich aufgrund der in dem Ofen deutlich höheren Temperatur $T_i$ im Verhältnis zur Temperatur der den Ofen umgebenden Atmosphäre $T_a$. Der Wärme-übergangskoeffizient an der Außenwand des Ofens beträgt alpha$_a$.

Nach dem erfindungsgemäßen Verfahren berechnet sich die Wärmeleitfähigkeit des Bereichs,in dem das Temperaturmeßelement angeordnet ist für eine im wesentlichen ebene Wand mit der Beziehung:

$$\text{lambda} = \frac{\Delta s_T}{\dfrac{T - T_a}{\dot{q}_s} - \left[\displaystyle\sum_{i=1}^{n} \frac{\Delta s_i}{\lambda_i}\right] - \dfrac{1}{\alpha_a}}$$

wobei

| | |
|---|---|
| $\dot{q}_s$ | = die ermittelte Wärmestromdichte in (W/m$^2$), |
| DELTA $s_T$= | der Abstand des Temperaturmeßelements zur nächst äußeren Mauerwerks- oder Mantelschicht mit anderer Wärmeleitfähigkeit oder zur Außenseite des Ofens in (m), |
| DELTA $s_i$ | = die Dicke der i-ten weiter äußeren Mauerwerks- oder Mantelschicht mit anderer Wärmeleitfähigkeit in (m), |
| lambda$_i$ = | die Wärmeleitfähigkeit der i-ten weiter äußeren Mauerwerks- oder Mantelschicht mit anderer Wärmeleitfähigkeit in (W/(m K)), |
| ALPHA$_a$ | = der Wärmeübergangskoeffizient an der Außenseite der Außenwand des Ofens zur umgebenden Atmosphäe in (W/(m$^2$ K)) |
| $T_a$ | = die Außentemperatur der den Ofen umgebenden Atmosphäre in (K), |
| T | = die von dem Temperaturmeßelement gemessene Temperatur in (K), |
| n | = die Anzahl der weiter äußeren Mauerwerks- oder Mantelschichten mit anderer Wärmeleitfähigkeit. |

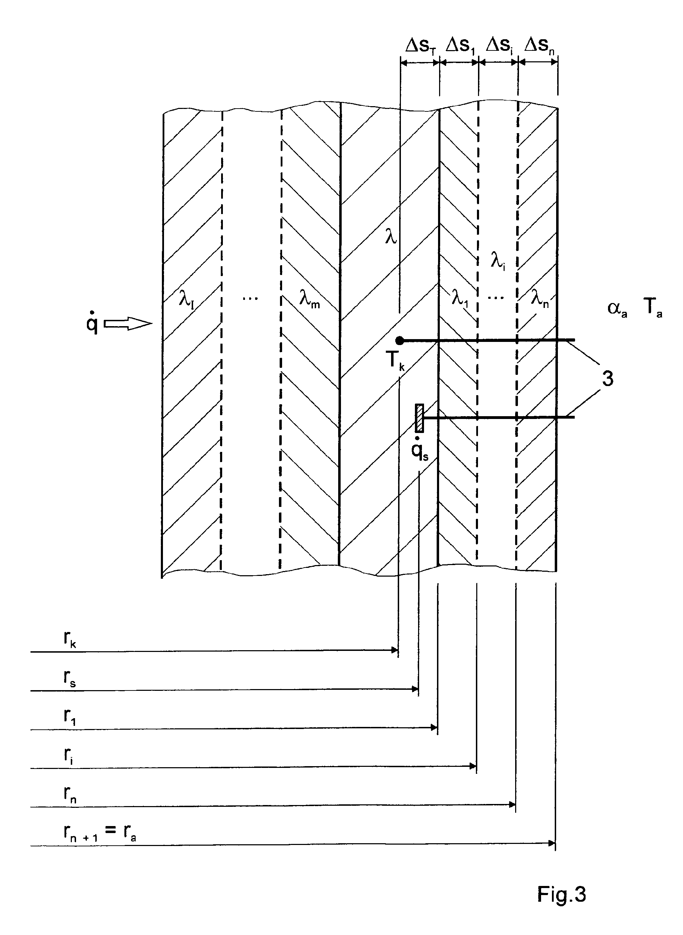

Die in Fig. 3 abschnittweise in einer Schnittdarstellung dargestellte näherungsweise zylindrisch oder kegelförmig ausgedehnte Ofenwand ist aus mehreren Abschnitten zusammengesetzt. Die Ofenwand wird nach außen durch eine Außenwand, häufig auch "Panzer" genannt, abgeschlossen. Diese Außenwand weist die Wärmeleitfähigkeit lamb-da$_n$ auf. Angrenzend an die Außenwand ist eine Ofenauskleidung vorgesehen, die aus mehreren mit Feuerfestmaterialsteinen gemauerten oder mit Stampfmassen bzw. Feuerfestbetonen ausgefüllten Bereichen mit den jeweiligen Wär-meleitfähigkeiten $\lambda_i$ besteht Die aus mehreren Feuerfestmaterialsteinen gemauerte oder mit Stampfmassen bzw. Feuerfestbetonen ausgefüllten Bereiche haben zur Zylinder-, bzw. Kegelachse den Abstand $r_i$.

In einem der Feuerfestmaterialsteine der Ofenauskleidung ist das Temperaturmeßelement T und die Wärme-stromsonde $\dot{q}_s$ dargestellt. Diese sind über einzelne, schematisch dargestellte Leitungen 3 mit einer außerhalb des Ofens angeordneten, nicht näher dargestellten Auswerteeinheit verbunden.

Fig. 3 zeigt ferner, daß weitere Wandabschnitte bekannter oder unbekannter Wärmeleitfähigkeit in Richtung auf das Ofeninnere vorgesehen sein können. Das Temperaturmeßelement T ist in einem Abstand $r_T$ zur Zylinder- oder Kegelachse angeordnet. Die Wärmestromsonde weist einen Abstand von $r_s$ zur Zylinder- oder Kegelachse auf.

Fig. 3 zeigt ferner die durch die Ofenwand strömenden Wärmestromdichte $\dot{q}$. Diese ergibt sich aufgrund der in dem Ofen deutlich höheren Temperatur $T_i$ im Verhältnis zur Temperatur der den Ofen umgebenden Atmosphäre $T_a$. Der Wärmeübergangskoeffizient an der Außenwand des Ofens beträgt alpha$_a$.

Nach dem erfindungsgemäßen Verfahren berechnet sich die Wärmeleitfähigkeit des Bereichs mit dem Temperaturmeßelement für die im wesentlichen zylinderförmige oder kegelförmige Wand mit der Beziehung:

$$\text{lambda} = \frac{r_a \times \ln\left(\dfrac{r_1}{r_T}\right)}{\dfrac{T - T_a}{\dot{q}_s \times r_s} - \left[\displaystyle\sum_{i=1}^{n} \frac{r_a \times \ln\left(\dfrac{r_{i+1}}{r_i}\right)}{\lambda_i}\right] - \dfrac{1}{\alpha_a}}$$

wobei

$\dot{q}_s$ = die ermittelte Wärmestromdichte in (W/m$^2$),

$r_a$, $r_{n+1}$ = der Abstand der Außenwand des Ofens zur Achse des Zylinders oder des Kegels in (m)

$r_S$ = der Abstand der Position der Wärmestromsonde zur Achse des Zylinders oder des Kegels in (m)

$r_T$ = der Abstand des Temperaturmeßelements zur Achse des Zylinders oder des Kegels in (m),

$r_i$ = der Abstand der inneren Wand der i-ten weiter äußeren Mauerwerks- oder Mantelschicht mit anderer Wärmeleitfähigkeit zur Achse des Zylinders oder des Kegels in (m),

$r_1$ = der Abstand des äußeren Endes des aus gleichem Feuerfestmaterial bestehenden Abschnitts, in dem das Temperaturmeßelement angeordnet ist, zur Achse des Zylinders oder Kegels in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

$T_a$ = die Außentemperatur der den Ofen umgebenden Atmosphäre in (K),

$T$ = die von dem Temperaturmeßelement gemessene Temperatur in (K),

$n$ = die Anzahl der weiter äußeren Mauerwerks- oder Mantelschichten mit anderer Wärmeleitfähigkeit.

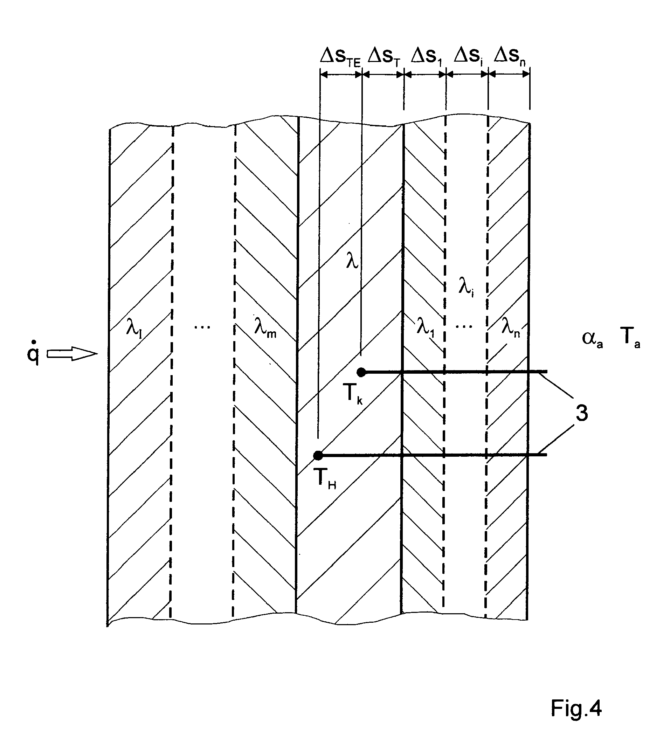

Die in Fig. 4 abschnittweise in einer Schnittdarstellung dargestellte näherungsweise "unendlich ausgedehnte ebene Ofenwand" ist aus mehreren Abschnitten zusammengesetzt. Die Ofenwand wird nach außen durch eine Außenwand, häufig auch "Panzer" genannt, abgeschlossen. Diese Außenwand weist die Wärmeleitfähigkeit lambda$_n$ auf. Angrenzend an die Außenwand ist eine Ofenauskleidung vorgesehen, die aus mehreren mit Feuerfestmaterialsteinen gemauerten oder mit Stampfmassen bzw. Feuerfestbetonen ausgefüllten Bereichen mit den jeweiligen Wärmeleitfähigkeiten $\lambda_i$ besteht Die aus mehreren Feuerfestmaterialsteinen gemauerte oder mit Stampfmassen bzw. Feuerfestbetonen ausgefüllten Bereiche haben die Wandstärke DELTA $s_i$. In dem mittleren Bereich ist ein erstes Temperaturmeßelement $T_H$ und ein zumindest in Wärmeflußrichtung beabstandet dazu angeordnetes zweites Temperaturmeßelement $T_K$ vorgesehen.

In einem der Feuerfestmaterialsteine der Ofenauskleidung sind die Temperatur elemente $T_K$, $T_H$ dargestellt. Diese sind über einzelne, schematisch dargestellte Leitungen 3 mit einer außerhalb des Ofens angeordneten, nicht näher dargestellten Auswerteeinheit verbunden.

Fig. 4 zeigt ferner, daß weitere Wandabschnitte mit bekannter oder unbekannter Wärmeleitfähigkeit in Richtung auf das Ofeninnere vorgesehen sein können. Das erste Temperaturmeßelement $T_H$ weist einem Abstand DELTA $s_{TE}$ zum zweiten Temperaturmeßelement $T_K$ auf. Das zweite Tempertaurmeßelement weist einen Abstand von DELTA sT zur nächst äußeren Mauerwerks- oder Mantelschicht anderer Wärmeleitfähigkeit auf.

Fig. 4 zeigt ferner die durch die Ofenwand strömende Wärmestromdichte $\dot{q}$. Diese ergibt sich aufgrund der in dem Ofen deutlich höheren Temperatur $T_i$ im Verhältnis zur Temperatur der den Ofen umgebenden Atmosphäre $T_a$. Der Wärmeübergangskoeffizient an der Außenwand des Ofens beträgt alpha$_a$.

Nach dem erfindungsgemäßen Verfahren berechnet sich die Wärmeleitfähigkeit der im wesentlichen ebenen Wand mit der Beziehung:

$$\text{lambda} = \frac{(\Delta s_{TE} + \Delta s_T) \times (T_K - T_a) - \Delta s_T \times (T_H - T_K)}{(T_H - T_K) \times \left[\left(\displaystyle\sum_{i=1}^{n} \frac{\Delta s_i}{\lambda_i}\right) + \frac{1}{\alpha_a}\right]}$$

wobei

| | |
|---|---|
| DELTA $s_T$ | = der Abstand des im kälteren Bereich angeordneten Temperaturmeßelements zur nächst äußeren Mauerwerks- oder Mantelschicht anderer Wärmeleitfähigkeit oder zur Außenseite in (m), |
| DELTA $s_{TE}$ | = der Abstand des ersten Temperaturmeßelements zum zweiten Temperturmeßelement in (m) |
| DELTA $s_i$ | = die Dicke der i-ten weiter äußeren Mauerwerks- oder Mantelschicht mit anderer Wärmeleitfähigkeit in (m), |
| $lambda_i$ | = die Wärmeleitfähigkeit der i-ten weiter äußeren Mauerwerks- oder Mantelschicht mit anderer Wärmeleitfähigkeit in (W/(m K)), |
| $ALPHA_a$ | = der Wärmeübergangskoeffizient an der Außenseite der Außenwand des Ofens zur umgebenden Atmosphäe in (W/(m$^2$ K)) |
| $T_a$ | = die Außentemperatur der den Ofen umgebenden Atmosphäre in (K), |
| n | = die Anzahl der weiter äußeren Mauerwerks- oder Mantelschichten mit anderer Wärmeleitfähigkeit, |
| $T_K$ | = die von dem im kälteren Bereich angeordneten Temperaturmeßelement gemessene Temperatur in (K), |
| $T_H$ | = die von dem im wärmeren Bereich angeordneten Temperaturmeßelement gemessene Temperatur in (K) |

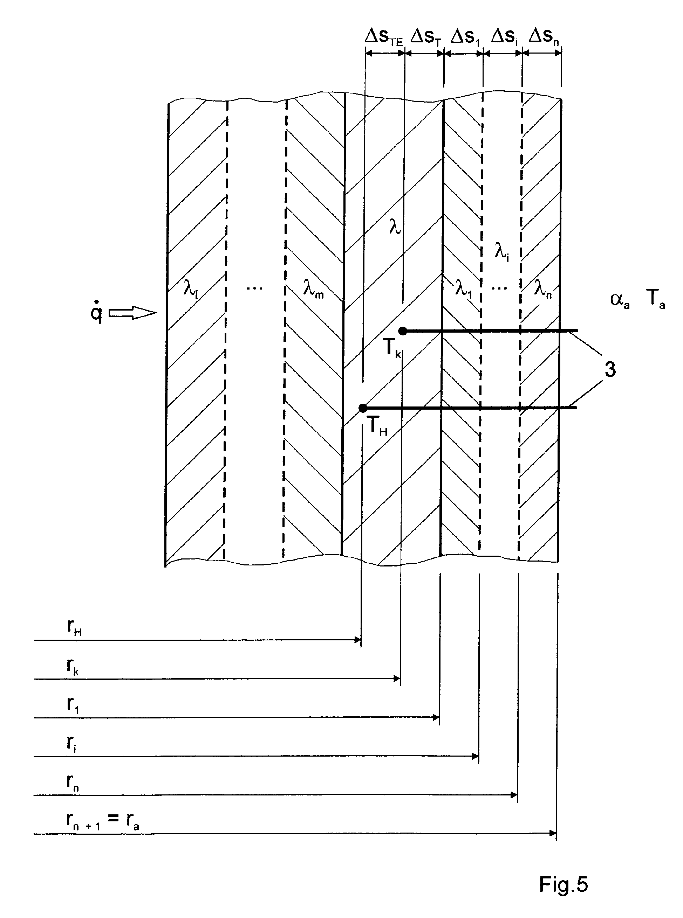

Die in Fig. 5 abschnittweise in einer Schnittdarstellung dargestellte näherungsweise zylinder oder kegelförmige Ofenwand ist aus mehreren Abschnitten zusammengesetzt. Die Ofenwand wird nach außen durch eine Außenwand, häufig auch "Panzer" genannt, abgeschlossen. Diese Außenwand weist die Wärmeleitfähigkeit $lambda_n$ auf. Angrenzend an die Außenwand ist eine Ofenauskleidung vorgesehen, die aus mehreren mit Feuerfestmaterialsteinen gemauerten oder mit Stampfmassen bzw. Feuerfestbetonen ausgefüllten Bereichen mit den jeweiligen Wärmeleitfähigkeiten $\lambda_i$ besteht Die einzelnen Wandabschnitte haben zur Zylinder-, bzw. Kegelachse eine Abstand von $r_i$. In dem mittleren Bereich ist ein erstes Temperaturelement $T_H$ und ein zumindest in Wärmeflußrichtung beabstandet dazu angeordnetes zweites Temperaturmeßelement $T_K$ vorgesehen.

In einem der Feuerfestmaterialsteine der Ofenauskleidung sind die Temperaturmeßelemente $T_H$ und $T_K$ dargestellt. Diese sind über einzelne, schematisch dargestellte Leitungen 3 mit einer außerhalb des Ofens angeordneten, nicht näher dargestellten Auswerteeinheit verbunden.

Fig. 5 zeigt ferner, daß weitere Wandabschnitte bekannter oder unbekannter Wärmeleitfähigkeit in Richtung auf das Ofeninnere vorgesehen sein können. Das erste Temperaturmeßelement $T_H$ weist einen Abstand $r_H$ zur Zylinder- oder Kegelachse auf. Das zweite Temperaturmeßelement $T_K$ weist eine Abstand von $r_K$ zur Zylinder- oder Kegelachse auf.

Fig. 2 zeigt ferner die durch die Ofenwand strömende Wärmestrom $\dot{q}$. Diese ergibt sich aufgrund der in dem Ofen deutlich höheren Temperatur $T_i$ im Verhältnis zur Temperatur der den Ofen umgebenden Atmosphäre $T_a$. Der Wärmeübergangskoeffizient an der Außenwand des Ofens beträgt $alpha_a$.

Nach dem erfindungsgemäßen Verfahren berechnet sich die Wärmeleitfähigkeit der im wesentlichen zylinder- oder kegelförmige Wand mit der Beziehung:

$$lambda = \frac{\left(T_H - T_a\right) \times \ln\left(\frac{r_1}{r_K}\right) - \left(T_K - T_a\right) \times \ln\left(\frac{r_1}{r_H}\right)}{\left(T_K - T_H\right) \times \left[\left(\sum_{i=1}^{n}\left(\frac{\ln\left(\frac{r_{i+1}}{r_i}\right)}{\lambda_i}\right)\right) + \frac{1}{\alpha_a \times r_a}\right]}$$

wobei

| | |
|---|---|
| $r_K$ | = der Abstand des im kälteren Bereich angeordneten Temperaturmeßelement zur Achse des Zylinders oder Kegels in (m), |
| $r_H$ | = der Abstand des im heißeren Bereich angeordneten Temperaturmeßelement zur Achse des Zylinders oder Kegels in (m), |
| $r_1$ | = der Abstand des äußeren Endes des aus gleichem Feuerfestmaterial bestehenden Abschnitts, in dem das erste und das zweite Temperaturmeßelement angeordnet sind, zur Achse des Zylinders oder Kegels in (m), |
| $r_a$, $r_{n+1}$ | = der Abstand der Außenwand des Ofens zur Achse des Zylinders oder des Kegels in (m) |

$r_i$ = der Abstand der inneren Wand der i-ten weiter äußeren Mauerwerks- oder Mantelschicht zur Achse des Zylinders oder des Kegels in (m),

$lambda_i$ = die Wärmeleitfähigkeit der i-ten weiter äußeren Mauerwerks- oder Mantelschicht mit anderer Wärmeleitfähigkeit in (W/(m K)),

n = die Anzahl der weiter äußeren Mauerwerks- oder Mantelschichten mit anderer Wärmeleitfähigkeit,

$alpha_a$ = der Wärmeübergangskoeffizient an der Außenseite der Außenwand zur umgebenden Atmosphäre hin in (W(m2 K),

$T_K$ = die von dem im kälteren Bereich angeordneten Temperaturmeßelement gemessene Temperatur in (°C oder K),

$T_H$ = die von dem im wärmeren Bereich angeordneten Temperaturmeßelement gemessene Temperatur in (°C oder K) und

$T_a$ = die Außentemperatur der den Ofen umgebenden Atmosphäre in (°C oder K).

**Patentansprüche**

1. Verfahren zur Ermittlung der Wärmeleitfähigkeit des Feuerfestmaterials einer Ofenauskleidung, bei dem

   - die Wärmestromdichte, bzw. der Wärmestrom durch die Ofenauskleidung mit einer in der Ofenauskleidung angeordneten Wärmestromsonde oder aus der Temperaturdifferenz über einen in der Ofenauskleidung angeordneten Referenzkörper aus einem Referenzmaterial mit im wesentlichen bekannter Wärmeleitfähigkeit ermittelt wird,
   - mit mindestens einem Temperaturmeßelement die Temperatur des Feuerfestmaterials im Bereich des Temperaturmeßelements ermittelt wird und
   - die Wärmeleitfähigkeit des Feuerfestmaterials im Bereich des Temperaturmeßelements aus dem Wärmestrom durch die Ofenauskleidung, bzw. der Wärmestromdichte und dem Meßwert des Temperaturmeßelements ermittelt wird.

2. Verfahren nach Anspruch 1, **dadurch gekennzeichnet, daß** mit einem ersten Temperaturmeßelement die Temperatur des Feuerfestmaterials an einem ersten Meßpunkt und mit einem zweiten Temperaturmeßelement die Temperatur des Feuerfestmaterials an einem zweiten, in Wärmeflußrichtung nicht senkrecht zum ersten beabstandeten Meßpunkt ermittelt wird und die Wärmeleitfähigkeit des Feuerfestmaterials im Bereich zwischen den beiden Temperaturmeßelementen aus

   - dem Wärmestrom durch die Ofenauskleidung oder der Wärmestromdichte,
   - dem Abstand der Temperaturmeßelemente und
   - der aus dem Meßsignal des ersten Temperaturmeßelements und dem Meßsignal des zweiten Temperaturmeßelements ermittelten Temperaturdifferenz zwischen dem ersten Meßpunkt und dem zweiten Meßpunkt ermittelt wird.

3. Verfahren nach Anspruch 2, **dadurch gekennzeichnet, daß** die Wärmeleitfähigkeit (lambda) für eine ebene Wand mit der Beziehung:

$$lambda = \dot{q}_s \times \frac{\Delta s}{T_1 - T_2}$$

ermittelt wird, wobei

$\dot{q}_s$ = die ermittelte Wärmestromdichte in (W/m$^2$),
DELTA s = der Abstand des ersten Temperturmeßelements zum zweiten Temperaturmeßelement in (m),
$T_1$ = die von dem ersten Temperaturmeßelement gemessene Temperatur in (K),
$T_2$ = die von dem zweiten Temperaturmeßelement gemessene Temperatur in (K).

4. Verfahren nach Anspruch 2, **dadurch gekennzeichnet, daß** die Wärmeleitfähigkeit (lambda) für eine im wesentlichen zylinderförmige oder kegelförmige Wand mit der Beziehung:

$$\text{lambda} = \dot{q}_s \times r_s \frac{\ln \dfrac{r + \Delta s}{r}}{T_1 - T_2}$$

ermittelt wird, wobei

$\dot{q}_s$ = die ermittelte Wärmestromdichte in (W/m$^2$),
$r_s$ = der Abstand der Wärmestromsonde, bzw. des Referenzkörpers zur Zylinder- oder Kegelachse in (m),
$r$ = der Abstand des ersten Temperaturmeßelements zur Zylinder- oder Kegelachse in (m),
DELTA s = der Abstand des ersten Temperaturmeßelements zum zweiten Temperaturmeßelement in (m),
$T_1$ = die von dem ersten Temperaturmeßelement gemessene Temperatur in (K),
$T_2$ = die von dem zweiten Temperaturmeßelement gemessene Temperatur in (K).

**5.** Verfahren nach Anspruch 1 oder 2, **dadurch gekennzeichnet, daß** die Wärmeleitfähigkeit für eine im wesentlichen kugelförmige Wand ermittelt wird, insbesondere unter Einsatz einer auf einem Kugelkoordinatensystem basierenden Beziehung.

**6.** Verfahren nach Anspruch 1, **dadurch gekennzeichnet, daß** die Außentemperatur der den Ofen umgebenden Atmosphäre ermittelt wird und die Wärmeleitfähigkeit im Bereich des Temperaturmeßelements aus dem ermittelten Wärmestrom, der durch das Temperaturmeßelement ermittelten Temperatur und der Außentemperatur ermittelt wird.

**7.** Verfahren nach Anspruch 6, **dadurch gekennzeichnet, daß** die Wärmeleitfähigkeit (lambda) für eine im wesentlichen ebene Wand mit der Beziehung:

$$\text{lambda} = \frac{\Delta s_T}{\dfrac{T - T_a}{\dot{q}_s} - \left[ \displaystyle\sum_{i=1}^{n} \frac{\Delta s_i}{\lambda_i} \right] - \dfrac{1}{\alpha_a}}$$

ermittelt wird, wobei

$\dot{q}_s$ = die ermittelte Wärmestromdichte in (W/m$^2$),
DELTA $s_T$ = der Abstand des Temperaturmeßelements zur nächst äußeren Mauerwerks- oder Mantelschicht mit anderer Wärmeleitfähigkeit oder zur Außenseite des Ofens in (m),
DELTA $s_i$ = die Dicke der i-ten weiter äußeren Mauerwerks- oder Mantelschicht mit anderer Wärmeleitfähigkeit in (m),
lambda$_i$ = die Wärmeleitfähigkeit der i-ten weiter äußeren Mauerwerks- oder Mantelschicht mit anderer Wärmeleitfähigkeit in (W/(m K)),
ALPHA$_a$ = der Wärmeübergangskoeffizient an der Außenseite der Außenwand des Ofens zur umgebenden Atmosphäe in (W/($_M$$^2$ K))
$T_a$ = die Außentemperatur der den Ofen umgebenden Atmosphäre in (K),
$T$ = die von dem Temperaturmeßelement gemessene Temperatur in (K),
n = die Anzahl der weiter äußeren Mauerwerks- oder Mantelschichten mit anderer Wärmeleitfähigkeit.

**8.** Verfahren nach Anspruch 6, **dadurch gekennzeichnet, daß** die Wärmeleitfähigkeit (lambda) für eine im wesentlichen zylinderförmige oder kegelförmige Wand mit der Beziehung:

$$\text{lambda} = \frac{r_a \times \ln\left(\dfrac{r_1}{r_T}\right)}{\dfrac{T - T_a}{\dot{q}_s \times r_s} - \left[\displaystyle\sum_{i=1}^{n} \dfrac{r_a \times \ln\left(\dfrac{r_{i+1}}{r_i}\right)}{\lambda_i}\right] - \dfrac{1}{\alpha_a}}$$

ermittelt wird, wobei

$\dot{q}_s$ = die ermittelte Wärmestromdichte in (W/m$^2$),
$r_a$, $r_{n+1}$ = der Abstand der Außenwand des Ofens zur Achse des Zylinders oder des Kegels in (m)
$r_s$ = der Abstand der Position der Wärmestromsonde zur Achse des Zylinders oder des Kegels in (m)
$r_T$ = der Abstand des Temperaturmeßelements zur Achse des Zylinders oder des Kegels in (m),
$r_i$ = der Abstand der inneren Wand der i-ten weiter äußeren Mauerwerks- oder Mantelschicht mit anderer Wärmeleitfähigkeit zur Achse des Zylinders oder des Kegels in (m),
$r_1$ = der Abstand des äußeren Endes des aus gleichem Feuerfestmaterial bestehenden Abschnitts, in dem das Temperaturmeßelement angeordnet ist, zur Achse des Zylinders oder Kegels in (m),
lambda$_i$ = die Wärmeleitfähigkeit der i-ten weiter äußeren Mauerwerks- oder Mantelschicht mit anderer Wärmeleitfähigkeit in (W/(m K)),
ALPHA$_a$ = der Wärmeübergangskoeffizient an der Außenseite der Außenwand des Ofens zur umgebenden Atmosphäe in (W/(m$^2$ K))
$T_a$ = die Außentemperatur der den Ofen umgebenden Atmosphäre in (K),
T = die von dem Temperaturmeßelement gemessene Temperatur in (K),
n = die Anzahl der weiter äußeren Mauerwerks- oder Mantelschichten mit anderer Wärmeleitfähigkeit.

9. Verfahren nach Anspruch 6, **dadurch gekennzeichnet, daß** die Wärmeleitfähigkeit für eine im wesentlichen kugelförmige Wand ermittelt wird, unter Einsatz einer auf einem Kugelkoordinatensystem basierenden Beziehung.

10. Verfahren zur Ermittlung der Wärmeleitfähigkeit des Feuerfestmaterials einer Ofenauskleidung, bei dem

- mit einem ersten Temperaturmeßelement die Temperatur des Feuerfestmaterials an einem ersten Meßpunkt
- mit einem zweiten Temperaturmeßelement die Temperatur des Feuerfestmaterials an einem zweiten, in Wärmeflußrichtung nicht senkrecht zum ersten beabstandeten Meßpunkt ermittelt wird,
- mit einem weiteren Temperaturmeßelement die Temperatur der den Ofen umgebenden Atmosphäre gemessen wird und
- die Wärmeleitfähigkeit des Feuerfestmaterials im Bereich zwischen dem ersten und dem zweiten Temperaturmeßelementen aus den Meßwerten der Temperaturmeßelemente und von der räumlichen Position der Temperaturmeßelemente abhängigen Längenangaben ermittelt wird.

11. Verfahren nach Anspruch 10, **dadurch gekennzeichnet, daß** die Wärmeleitfähigkeit (lambda) für eine im wesentlichen ebene Wand mit der Beziehung:

$$\text{lambda} = \frac{\left(\Delta s_{TE} + \Delta s_T\right) \times \left(T_K - T_a\right) - \Delta s_T \times \left(T_H - T_K\right)}{\left(T_H - T_K\right) \times \left[\left(\displaystyle\sum_{i=1}^{n} \dfrac{\Delta s_i}{\lambda_i}\right) + \dfrac{1}{\alpha_a}\right]}$$

ermittelt wird, wobei

DELTA $s_T$ = der Abstand des im kälteren Bereich angeordneten Temperaturmeßelements zur nächst äußeren Mauerwerks- oder Mantelschicht anderer Wärmeleitfähigkeit oder zur Außenseite in (m),
DELTA $s_{TE}$ = der Abstand des ersten Temperaturmeßelements zum zweiten Temperturmeßelement in (m)

DELTA $s_i$ = die Dicke der i-ten weiter äußeren Mauerwerks- oder Mantelschicht mit anderer Wärmeleitfähigkeit in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

$T_a$ = die Außentemperatur der den Ofen umgebenden Atmosphäre in (K),

n = die Anzahl der weiter äußeren Mauerwerks- oder Mantelschichten mit anderer Wärmeleitfähigkeit,

$T_K$ = die von dem im kälteren Bereich angeordneten Temperaturmeßelement gemessene Temperatur in (K),

$T_H$ = die von dem im wärmeren Bereich angeordneten Temperaturmeßelement gemessene Temperatur in (K)

**12.** Verfahren nach Anspruch 10, **dadurch gekennzeichnet, daß** die Wärmeleitfähigkeit (lambda) für eine im wesentlichen zylinder- oder kegelförmige Wand mit der Beziehung:

$$\text{lambda} = \frac{(T_H - T_a) \times \ln\left(\frac{r_1}{r_K}\right) - (T_K - T_a) \times \ln\left(\frac{r_1}{r_H}\right)}{(T_K - T_H) \times \left[\left(\sum_{i=1}^{n}\left(\frac{\ln\left(\frac{r_{i+1}}{r_i}\right)}{\lambda_i}\right)\right) + \frac{1}{\alpha_a \times r_a}\right]}$$

ermittelt wird, wobei

$r_K$ = der Abstand des im kälteren Bereich angeordneten Temperaturmeßelement zur Achse des Zylinders oder Kegels in (m),

$r_H$ = der Abstand des im heißeren Bereich angeordneten Temperaturmeßelement zur Achse des Zylinders oder Kegels in (m),

$r_1$ = der Abstand des äußeren Endes des aus gleichem Feuerfestmaterial bestehenden Abschnitts, in dem das erste und das zweite Temperaturmeßelement angeordnet sind, zur Achse des Zylinders oder Kegels in (m),

$r_a$, $r_{n+1}$ = der Abstand der Außenwand des Ofens zur Achse des Zylinders oder des Kegels in (m)

$r_i$ = der Abstand der inneren Wand der i-ten weiter äußeren Mauerwerks- oder Mantelschicht zur Achse des Zylinders oder des Kegels in (m),

lambda$_i$ = die Wärmeleitfähigkeit der i-ten weiter äußeren Mauerwerks- oder Mantelschicht mit anderer Wärmeleitfähigkeit in (W/(m K)),

n = die Anzahl der weiter äußeren Mauerwerks- oder Mantelschichten mit anderer Wärmeleitfähigkeit,

alpha$_a$ = der Wärmeübergangskoeffizient an der Außenseite der Außenwand zur umgebenden Atmosphäre hin in (W(m2 K),

$T_K$ = die von dem im kälteren Bereich angeordneten Temperaturmeßelement gemessene Temperatur in (˚C oder K),

$T_H$ = die von dem im wärmeren Bereich angeordneten Temperaturmeßelement gemessene Temperatur in (˚C oder K) und

$T_a$ = die Außentemperatur der den Ofen umgebenden Atmosphäre in (˚C oder K).

**13.** Verfahren nach Anspruch 10, **dadurch gekennzeichnet, daß** die Wärmeleitfähigkeit (lambda) für eine im wesentlichen kugelförmige Wand ermittelt wird, insbesondere unter Einsatz einer auf einem Kugelkoordinatensystem basierenden Beziehung.

**14.** Verfahren zur Ermittlung von Änderungen der Wärmeleitfähigkeit des Feuerfestmaterials oder Schädigungen im Feuerfestmaterial eines Ofens über einen gesondert ermittelten Parameter, insbesondere über den sogenannten Widerstandsbeiwert, bei dem

- mit mindestens einem Temperaturmeßelement die Temperatur des Feuerfestmaterials im Bereich des Temperaturmeßelements ermittelt wird,

- die Wärmestromdichte, bzw. der Wärmestrom durch die Ofenauskleidung mit einer in der Ofenauskleidung angeordneten Wärmestromsonde oder aus der Temperaturdifferenz über einen in der Ofenauskleidung angeordneten Referenzkörper aus einem Referenzmaterial mit im wesentlichen bekannter Wärmeleitfähigkeit ermittelt wird,
- ein zusätzlicher Parameter, insbesondere der sogenannte Widerstandsbeiwert, im Bereich des Temperaturmeßelements oder für den Bereich zwischen dem Temperaturmeßelement und der den Ofen umgebenden Atmosphäre ermittelt wird.

15. Verfahren nach Anspruch 14, **dadurch gekennzeichnet, daß** der Widerstandsbeiwert ($R_W$) für eine im wesentlichen ebene Wand mit der Beziehung

$$R_W = \frac{T - T_a}{\dot{q}_s} - \left( \frac{\Delta s_T}{\lambda} + \left( \sum_{i=1}^{n} \frac{\Delta s_i}{\lambda_i} \right) + \frac{1}{\alpha_a} \right)$$

ermittelt wird, wobei

$R_W$ = Widerstandsbeiwert in ($m^2$ K/W)
$\dot{q}_s$ = die ermittelte Wärmestromdichte in (W/$m^2$),
DELTA $s_T$ = der Abstand des Temperaturmeßelements zur nächst äußeren Mauerwerks- oder Mantelschicht mit anderer Wärmeleitfähigkeit oder zur Außenseite des Ofens in (m),
DELTA $s_i$ = die Dicke der i-ten weiter äußeren Mauerwerks- oder Mantelschicht mit anderer Wärmeleitfähigkeit in (m),
$lambda_i$ = die Wärmeleitfähigkeit der i-ten weiter äußeren Mauerwerks- oder Mantelschicht mit anderer Wärmeleitfähigkeit in (W/(m K)),
$ALPHA_a$ = der Wärmeübergangskoeffizient an der Außenseite der Außenwand des Ofens zur umgebenden Atmosphäe in (W/($m^2$ K))
$T_a$ = die Außentemperatur der den Ofen umgebenden Atmosphäre in (K),
T = die von dem Temperaturmeßelement gemessene Temperatur in (K),
n = die Anzahl der weiter äußeren Mauerwerks- oder Mantelschichten mit anderer Wärmeleitfähigkeit,
lambda = die Wärmeleitfähigkeit der Mauerwerks- oder Mantelschicht, in der das Temperaturmeßelement eingebracht ist in (W/(m K)).

16. Verfahren nach Anspruch 14, **dadurch gekennzeichnet, daß** der Widerstandsbeiwert ($R_W$) für eine im wesentlichen zylinderförmige oder kegelförmige Wand mit der Beziehung

$$R_W = \frac{(T - T_a) \times r_a}{r_s \times \dot{q}_s} - \left( \frac{r_a}{\lambda} \times \ln\left( \frac{r_1}{r_T} \right) + \left( \sum_{i=1}^{n} \left( \frac{r_a}{\lambda_i} \times \ln\left( \frac{r_{i+1}}{r_i} \right) \right) \right) + \frac{1}{\alpha_a} \right)$$

ermittelt wird, wobei

$R_W$ = Widerstandsbeiwert in ($m^2$ K / W)
$\dot{q}_s$ = die ermittelte Wärmestromdichte in (W/$m^2$),
$r_a$, $r_{n+1}$ = der Abstand der Außenwand des Ofens zur Achse des Zylinders oder des Kegels in (m)
$r_1$ = der Abstand des äußeren Endes des aus gleichem Feuerfestmaterial bestehenden Abschnitts, in dem das erste und das zweite Temperaturmeßelement angeordnet sind, zur Achse des Zylinders oder Kegels in (m),
$r_S$ = der Abstand der Position der Wärmestromsonde, bzw. des Refernzkörpers zur Achse des Zylinders oder des Kegels in (m)
$r_T$ = der Abstand des Temperaturmeßelements zur Achse des Zylinders oder des Kegels in (m),
$r_i$ = der Abstand der inneren Wand der i-ten weiter äußeren Mauerwerks-oder Mantelschicht mit anderer Wärmeleitfähigkeit zur Achse des Zylinders oder des Kegels in (m),
$lambda_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

T$_a$ = die Außentemperatur der den Ofen umgebenden Atmosphäre in (K),

T = die von dem Temperaturmeßelement gemessene Temperatur in (K),

n = die Anzahl der weiter äußeren Mauerwerks- oder Mantelschichten mit anderer Wärmeleitfähigkeit,

lambda = die Wärmeleitfähigkeit der Mauerwerks- oder Mantelschicht, in der das Temperaturmeßelement eingebracht ist in (W/(m K)).

**17.** Verfahren nach Anspruch 14, **dadurch gekennzeichnet, daß** der Widerstandsbeiwert (R$_W$) für eine im wesentlichen kugelförmige Wand ermittelt wird, insbesondere unter Einsatz einer auf einem Kugelkoordinatensystem basierenden Beziehung.

**18.** Verfahren zur Ermittlung von Änderungen der Wärmeleitfähigkeit des Feuerfestmaterials oder Schädigungen im Feuerfestmaterial eines Ofens über einen gesondert ermittelten Parameter, insbesondere über den sogenannten Widerstandsbeiwert, bei dem

- mit einem ersten Temperaturmeßelement die Temperatur des Feuerfestmaterials an einem ersten Meßpunkt
- mit einem zweiten Temperaturmeßelement die Temperatur des Feuerfestmaterials an einem zweiten, in Wärmeflußrichtung nicht senkrecht zum ersten beabstandeten Meßpunkt ermittelt wird,
- mit einem weiteren Temperaturmeßelement die Temperatur der den Ofen umgebenden Atmosphäre gemessen wird und
- ein zusätzlicher Parameter, insbesondere der Widerstandsbeiwert, für den Bereich zwischen den Temperaturmeßelementen und der Umgebung ermittelt wird.

**19.** Verfahren nach Anspruch 18, **dadurch gekennzeichnet, daß** der Widerstandsbeiwert (R$_W$) für eine im wesentlichen ebene Wand mit der Beziehung

$$R_W = \frac{\Delta s_{TE}}{\lambda} \times \frac{T_K - T_a}{T_H - T_K} - \left( \frac{\Delta s_T}{\lambda} + \left( \sum_{i=1}^{n} \frac{\Delta s_i}{\lambda_i} \right) + \frac{1}{\alpha_a} \right)$$

ermittelt wird, wobei

R$_W$ = der Widerstandsbeiwert in (m$^2$ K / W)

DELTA s$_T$ = der Abstand des im kälteren Bereich angeordneten Temperaturmeßelements zur nächst äußeren Mauerwerks- oder Mantelschicht anderer Wärmeleitfähigkeit oder zur Außenseite in (m),

DELTA s$_{TE}$ = der Abstand des ersten Temperaturmeßelements zum zweiten Temperturmeßelement in (m)

DELTA s$_i$ = die Dicke der i-ten weiter äußeren Mauerwerks- oder Mantelschicht mit anderer Wärmeleitfähigkeit in (m),

lambda$_i$ = die Wärmeleitfähigkeit der i-ten weiter äußeren Mauerwerks- oder Mantelschicht mit anderer Wärmeleitfähigkeit in (W/(m K)),

ALPHA$_a$ = der Wärmeübergangskoeffizient an der Außenseite der Außenwand des Ofens zur umgebenden Atmosphäe in (W/(m$^2$ K))

T$_a$ = die Außentemperatur der den Ofen umgebenden Atmosphäre in (K),

n = die Anzahl der weiter äußeren Mauerwerks- oder Mantelschichten mit anderer Wärmeleitfähigkeit,

T$_K$ = die von dem im kälteren Bereich angeordneten Temperaturmeßelement gemessene Temperatur in (K),

T$_H$ = die von dem im wärmeren Bereich angeordneten Temperaturmeßelement gemessene Temperatur in (K) und

lambda = die Wärmeleitfähigkeit der Mauerwerks- oder Mantelschicht, in der das im kälteren Bereich und das im wärmeren Bereich angeordnete Temperaturmeßelement angeordnet sind, in (W/(m K)).

**20.** Verfahren nach Anspruch 18, **dadurch gekennzeichnet, daß** der Widerstandsbeiwert (R$_W$) für eine im wesentlichen zylinderförmige oder kegelförmige Wand mit der Beziehung

$$R_W = \frac{\frac{ra}{\lambda}\left(\ln\left(\frac{r_1}{r_H}\right)(T_K - T_a) - \ln\left(\frac{r_1}{r_K}\right)(T_H - T_a)\right)}{T_H - T_K} - \left(\sum_{i=1}^{n}\left(\frac{r_a}{\lambda_i} \times \ln\left(\frac{r_{i+1}}{r_i}\right)\right)\right) - \frac{1}{\alpha_a}$$

ermittelt wird, wobei

$R_W$ = der Widerstandsbeiwert in ($m^2$ K / W)

lambda = die Wärmeleitfähigkeit der Mauerwerks- oder Mantelschicht, in der das im kälteren Bereich und das im wärmeren Bereich angeordnete Temperaturmeßelement angeordnet sind, in (W/(m K)).

$r_a$, $r_{n+1}$ = der Abstand der Außenwand des Ofens zur Achse des Zylinders oder des Kegels in (m)

$r_i$ = der Abstand der inneren Wand der i-ten weiter äußeren Mauerwerks-oder Mantelschicht mit anderer Wärmeleitfähigkeit zur Achse des Zylinders oder des Kegels in (m),

$lambda_i$ = die Wärmeleitfähigkeit der i-ten weiter äußeren Mauerwerks- oder Mantelschicht mit anderer Wärmeleitfähigkeit in (W/(m K)),

$ALPHA_a$ = der Wärmeübergangskoeffizient an der Außenseite der Außenwand des Ofens zur umgebenden Atmosphäe in (W/($m^2$ K))

$T_a$ = die Außentemperatur der den Ofen umgebenden Atmosphäre in (K),

T = die von dem Temperaturmeßelement gemessene Temperatur in (K),

n = die Anzahl der weiter äußeren Mauerwerks- oder Mantelschichten mit anderer Wärmeleitfähigkeit,

$r_K$ = der Abstand des im kälteren Bereich angeordneten Temperaturmeßelement zur Achse des Zylinders oder Kegels in (m),

$r_H$ = der Abstand des im heißeren Bereich angeordneten Temperaturmeßelement zur Achse des Zylinders oder Kegels in (m),

$T_K$ = die von dem im kälteren Bereich angeordneten Temperaturmeßelement gemessene Temperatur in (°C oder K),

$T_H$ = die von dem im wärmeren Bereich angeordneten Temperaturmeßelement gemessene Temperatur in (°C oder K).

21. Verfahren nach Anspruch 18, **dadurch gekennzeichnet, daß** der Widerstandsbeiwert ($R_W$) für eine im wesentlichen kugelförmige Wand ermittelt wird, insbesondere unter Einsatz einer auf einem Kugelkoordinatensystem basierenden Beziehung.

22. Verfahren nach einem der Ansprüche 1 bis 21, **dadurch gekennzeichnet, daß** die zeitliche Veränderung der Wärmeleitfähigkeit oder eines separat ermittelten Parameters, insbesondere des Widerstandsbeiwerts, ermittelt wird, in dem die Wärmeleitfähigkeit oder der separat ermittelte Parameter, insbesondere der Widerstandsbeiwert, zu verschiedenen Zeitpunkten ermittelt und die zu den verschiedenen Zeitpunkten ermittelten Wärmeleitfähigkeitswerte oder separat ermittelten Parameter, insbesondere die Widerstandsbeiwerte, miteinander verglichen werden.

23. Verfahren nach einem der Ansprüche 2 bis 22, **dadurch gekennzeichnet, daß** die ermittelte Wärmeleitfähigkeit oder ein separat ermittelter Parameter, insbesondere der Widerstandsbeiwert, mit einem Vergleichswert verglichen wird und bei einem Unterschied der ermittelten Wärmeleitfähigkeit oder des separat ermittelten Parameters, insbesondere des Widerstandsbeiwerts, der Abstand des ersten Temperaturmeßelements zum zweiten Temperaturmeßelement solange angepaßt wird, bis die ermittelte Wärmeleitfähigkeit oder der separat ermittelte Parameter, insbesondere der Widerstandsbeiwert, dem Vergleichswert entspricht.

24. Meßvorrichtung zur Ermittlung der Wärmeleitfähigkeit oder eines separat ermittelten Parameters, insbesondere des Widerstandsbeiwerts, des Feuerfestmaterials einer Ofenauskleidung mit

- einem ersten Temperaturmeßelement,
- einem zweiten Temperaturmeßelement und
- einer Auswerteeinheit, der das Meßsignal des ersten Temperaturmeßelements (erstes Meßsignal) und das Meßsignal des zweiten Temperaturmeßelements (zweites Meßsignal) zugeführt werden,

bei der das zweite Temperaturmeßelement beabstandet zum ersten Temperaturmeßelement angeordnet ist und bei dem die Auswerteeinheit die Wärmeleitfähigkeit oder den separat ermittelten Parameter, insbesondere den Widerstandsbeiwert, des Feuerfestmaterials im Bereich zwischen dem ersten Temperaturmeßelement und dem zweiten Temperaturmeßelement in Abhängigkeit des ersten Meßsignals und des zweiten Meßsignals bestimmen kann.

25. Meßvorrichtung zur Ermittlung der Wärmeleitfähigkeit oder eines separat ermittelten Parameters, insbesondere des Widerstandsbeiwerts, des Feuerfestmaterials einer Ofenauskleidung mit

   - einem ersten Temperaturmeßelement

und einer Wärmestromsonde.

26. Meßvorrichtung nach Anspruch 25 **gekennzeichnet durch** eine Auswerteeinheit, der das Meßsignal des ersten Temperaturmeßelements (erstes Meßsignal) und das Meßsignal der Wärmestromsonde (drittes Meßsignal) zugeführt werden, bei der die Auswerteeinheit die Wärmeleitfähigkeit oder den separat ermittelten Parameter, insbesondere den Widerstandsbeiwert, des Feuerfestmaterials im Bereich zwischen im Bereich des ersten Temperaturmeßelements in Abhängigkeit des ersten Meßsignals und des dritten Meßsignals bestimmen kann.

27. Meßvorrichtung nach einem der Ansprüche 24 bis 26, **dadurch gekennzeichnet, daß** das erste und/oder das zweite Temperaturmeßelement ein Thermoelement ist.

28. Meßvorrichtung zur Ermittlung der Wärmeleitfähigkeit oder eines separat ermittelten Parameters, insbesondere des Widerstandsbeiwerts, des Feuerfestmaterials einer Ofenauskleidung mit

   - einem ersten Temperaturmeßelement,
   - einem zweiten Temperaturmeßelement und
   - einer Wärmestromsonde.

29. Meßvorrichtung nach Anspruch 28, **gekennzeichnet durch** weitere Temperaturmeßelemente.

30. Meßvorrichtung zur Ermittlung der Wärmeleitfähigkeit oder eines separat ermittelten Parameters, insbesondere des Widerstandsbeiwerts, des Feuerfestmaterials einer Ofenauskleidung mit

   - einem ersten Temperaturmeßelement und
   - einen Referenzmeßkörper, der aus einem Referenzmaterial besteht und der mindestens ein vorderes Temperaturmeßelement und mindestens ein hinteres Temperaturmeßelement aufweist, die beabstandet zueinander in dem Referenzmaterial angeordnet sind.

31. Meßvorrichtung nach Anspruch 30, **gekennzeichnet durch** ein zweites Temperaturmeßelement oder weitere Temperaturmeßelemente.

32. Meßvorrichtung nach Anspruch einem der Ansprüche 28 bis 31, **dadurch gekennzeichnet, daß** die (eine) Wärmestromsonde oder der (ein) Referenzkörper in einem beliebigen Wandabschnitt oder an der Innen- oder Außenseite der Ofenwand angeordnet ist.

33. Meßvorrichtung nach einem der Ansprüche 28 bis 31, **dadurch gekennzeichnet, daß** die Wärmestromdichte indirekt über eine Spannungskette ermittelt wird.

Fig.1

Fig.2

Fig.3

Fig.4

Fig.5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006011816